(19) Europäisches Patentamt
European Patent Office
Office européen des brevets

(11) Veröffentlichungsnummer: **0 189 889**
**B1**

(12) **EUROPÄISCHE PATENTSCHRIFT**

(45) Veröffentlichungstag der Patentschrift: **02.05.90**

(51) Int. Cl.$^5$: **C 04 B 7/36**, B 28 C 5/00, C 04 B 7/00

(21) Anmeldenummer: **86101071.8**

(22) Anmeldetag: **28.01.86**

# (54) Verfahren zum Herstellen von Zementklinker.

(30) Priorität: **30.01.85 DE 3502957**

(43) Veröffentlichungstag der Anmeldung: **06.08.86 Patentblatt 86/32**

(45) Bekanntmachung des Hinweises auf die Patenterteilung: **02.05.90 Patentblatt 90/18**

(84) Benannte Vertragsstaaten: **AT BE CH DE FR GB IT LI NL SE**

(56) Entgegenhaltungen:

**ZEMENT-KALK-GIPS, Band 35, Nr. 6, Juni 1982, Seiten 324-327, Wiesbaden-Biebrich; P. VACHANI "Verwendung von Kalkhydratschlamm zur Zementerzeugung"**
**ZEMENT-KALK-GIPS, Band 32, Nr. 12, Dezember 1979, Seiten 598-603, Wiesbaden-Biebrich; J. HINTERKEUSER "Wirtschaftlicher Herstellung von Zementklinker durch Umstellung von Nass- auf Trockenverfahren"**

(73) Patentinhaber: **Readymix Zementwerke GmbH & Co. KG**
**Am Kollenbach 27 Postfach 1865-66**
**D-4720 Beckum 1 (DE)**

(72) Erfinder: **Pisters, Heinz, Dr.**
**Stiftstrasse 18**
**D-4720 Beckum 1 (DE)**
Erfinder: **Focken, Egon**
**Sunderkamp 30**
**D-4720 Beckum 2 (DE)**
Erfinder: **Pleske, Herbert**
**Fontane 16**
**D-4720 Beckum 1 (DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 189 889 B1**

**Beschreibung**

Die Erfindung betrifft ein Verfahren zum Herstellen von Zementklinker durch Mischen, Vermahlen und Trocknen der Rohstoffe Mergel, Kalkstein und Kalkschlamm, wobei der als pumpfähige, wässrige Suspension vorliegende Kalkschlamm den Kalkstein in der zu brennenden Mischung ganz oder teilweise substituiert und anschließendes Brennen zu Zementklinker sowie eine Vorrichtung zum Herstellen von Zementklinker, bestehend zumindest aus einer Mühle zum Mahlen und gleichzeitigem Trocknen der Rohstoffe und einem Brennofen zum Brennen des gemahlenen und getrockneten Rohmehls sowie einem von dem Heißgasaustrittsstutzen des Brennofens zum Trocknungsgaseintrittsstutzen der Mühle führenden Trocknungsgas-Rohr.

Aus der Veröffentlichung von P. Vachani, Zement-Kalk-Gips 35 (1982) S. 324—327 ist ein Verfahren zur Zementerzeugung bekannt, welches sich des Kalkhydratschlammes, des Feinkalkes und der Kalkstein-Abfälle aus einem PVC-Werk als Rohstoffe bedient. Der Kalkhydratschlamm fällt bei der Acethylenerzeugung gemäß

$$CaC_2+2\ H_2O \rightleftharpoons C_2H_2+Ca\ (OH)_2$$

an. Die Abfallstoffe werden mit Ton und Eisenerz in einer Naßmühle zu einer Rohmischung vermischt, deren Wassergehalt in einem Filtersystem auf 18 bis 38% herabgesetzt und die vor dem Brennen granuliert und in einem Trockenofen oder in einem Vorwärmerofen getrocknet wird.

Der Kalkhydratschlamm hat eine so große Wasserkonzentration und wird dem Verfahren in so hohen Mengenanteilen zugeführt, daß die Rohmischung in zusätzlichen Filtrations- und Trocknungsapparaten entwässert werden muß, bevor sie in den Brennofen eingeleitet wird. Durch diese Maßnahmen werden erhebliche Kosten verursacht.

Bei einem praktizierten Herstellungsverfahren für Zementklinker setzen sich die Rohstoffe zusammen aus etwa 70—80% Mergel und etwa 20—30% hochprozentigem Kalkstein. Diese Rohstoffe werden zunächst in separaten Brecheranlagen zerkleinert, bevor sie in getrennten Siloanlagen zwischengelagert werden. Anschließend werden sie über Transportorgane in korrespondierende Mühlenvorbunker gefördert. Unterhalb dieser Vorbunker sind Dosierbandwagen für die Beschickung einer Mühle, insbesondere einer Walzenschüsselmühle, angeordnet. Die dosierten Kalkstein- und Mergelmengen werden der Walzenschüsselmühle aufgegeben und dort bei gleichzeitiger Trocknung sehr fein gemahlen. Für diese Trocknung werden die Abgase aus dem Klinkerbrennprozeß verwendet, die das fertiggemahlene Rohmehl auch aus der Mühle austragen und es bis zum nachgeschalteten Elektrofilter transportieren. Dort wird das fertige Rohmehl von den Abgasen getrennt welche das System über einen Kamin gereinigt verlassen. Das abgeschiedene Rohmehl wird über Abschlußorgane, Schnecken, Redler und letztlich über einen pneumatischen Senkrechtförderer in ein Rohmehlsilo eingebracht.

Für den Brennprozeß wird das im Silo homogenisierte Rohmehl über einen Austrag dem Silo wieder entnommen und einem Wärmeaustauscher und nachfolgend einem Drehrohrofen über Dosierorgane zugeführt. Das Rohmehl wird dabei über einen intensiven Wärmeaustausch mit heißen Ofengasen in einzelnen Zyklonstufen des Wärmeaustauschers bis auf etwa 900°C erhitzt und tritt schon teilweise calziniert in den Drehofen ein. Durch die Rotation und die leichte Abwärtsneigung des Drehrohres wird das Material bis zum Auslauf transportiert und hierbei durch im Gegenstrom geführte Verbrennungsgase bis auf etwa 1450°C erhitzt. Bei dieser Temperatur erfolgt die eigentliche Zementklinkerbildung. Die Verbrennungsgase werden durch einen am Auslauf des Drehrohres befindlichen Brenner, der mit Brenn- bzw. Steinkohlenstaub betrieben wird, erzeugt.

Zur Kühlung des ofenfallenden Klinkers dient ein sogenannter Klinkergegenstromkühler. Der heiße Klinker fällt unmittelbar aus dem Drehrohrofen in das Kühlaggregat. In diesem Kühler gibt der heiße Klinker seine Wärme an die im Gegenstrom geführte Luft ab und wird über Walzenkörper ausgetragen. Die so erhitzte Kühlluft wird dem Drehrohrofen als sogenannte Sekundärluft vollständig zur Kohleverbrennung zugeführt, so daß die aus der Kühlung zurückgewonnene Wärmeenergie dem System wieder vollständig zur Verfügung steht.

Der Klinker wird über Transportorgane zwei stählernen Klinkersilos zugeführt, dort gelagert und kann den Silos zur anschließenden Klinkervermahlung entnommen werden.

Während Zementklinkerwerke zumeist unmittelbar neben einem Abbaugebiet für Mergel errichtet werden, so daß insoweit keine Transportkosten für das Rohmaterial anfallen, muß der Kalkstein zugekauft und antransportiert werden.

Davon ausgehend liegt der Erfindung die Aufgabe zugrunde, ein Verfahren sowie eine Vorrichtung der eingangs genannten Art bereitzustellen, mit denen die Investitions- und die Rohmaterialkosten gesenkt werden können, wobei der Energieverbrauch vorzugsweise gleichbleibend oder geringer ist.

Als technische Lösung dieser Aufgabe wird hinsichtlich eines Verfahrens vorgeschlagen, daß ein Kalkschlamm aus einem Teerverarbeitungsprozeß, insbesondere aus einem Reinigungsprozeß teerstämmiger Phenole verwendet wird und daß der Kalkschlamm mit den anderen Rohstoffen gleichzeitig gemischt und so getrocknet wird, daß ein brennbares Rohmehl entsteht; hinsichtlich der Vorrichtung wird erfindungsgemäß vorgeschlagen, einen Vorratsbehälter für eine wässrige Suspension aus Calzium-Carbonat mit einer Suspensionsaustragöffnung und eine zwischen der Suspensionsaustragöffnung und der Mühle angeordnete Suspensionsförderleitung mit darin angeordneter Suspensionsförderpumpe zu verwenden, wobei die Suspensionsförderleitung in einer Mahl/Trocknungskammer der Mühle, insbesondere einer Walzenschüsselmühle, mündet.

Die Erfindung basiert also auf dem Grundgedanken, bei der Zementklinkerherstellung die Kalksteinkomponente ganz oder teilweise durch einen Kalkschlamm aus einem Teerverarbeitungsprozeß zu substituieren. Der Kalkschlamm wird mit den anderen Rohrstoffen gleichzeitig gemischt und so getrocknet, daß ohne weitere Trocknungsschritte ein brennbares Rohmehl entsteht.

Durch die Erfindung werden unter anderem folgende Vorteile erzielt: Der erfindungsgemäß zu verwendende Kalkschlamm fällt in der chemischen Industrie zum Beispiel bei der Teerverwertung als Nebenprodukt an. Das bei der Teerverwertung gewonnene Phenol wird nämlich einem Reinigungsprozeß unterzogen, wobei die hier anfallende Sodalösung in einer Kaustifizierungsreaktion mit gebranntem Kalk umgesetzt wird und das gebildete Calzium-Carbonat aus dieser Lösung als Kalkschlamm mit einem Wassergehalt von etwa 40% ausfällt. Bisher wurde dieser Schlamm auf Deponien eingelagert. Durch die Erfindung wird das Deponieproblem gelöst und die Rohstoffkosten bei der Rohmehlherstellung werden verringert. Durch den Einsatz des Kalkschlammes ergibt sich gegenüber den bekannten Rohstoffen der Klinkerherstellung praktisch keine Änderung der Eigenschaften des Rohmehls oder des Zementklinkers. Trotz des erwähnt hohen Wassergehaltes des Kalkschlammes ist es überraschenderweise möglich, die Restfeuchtigkeit des Rohmehls auf den für den Klinkerbrennprozeß aus verfahrenstechnischen Gründen gewünschten Wert von kleiner als 1% abzusenken, ohne daß hierzu ein Energiemehrbedarf der Gesamtanlage auftritt.

Bevorzugt erfolgt die Mischung und Trocknung des Kalkschlammes innerhalb der Mühle, in der die Rohstoffe gleichzeitig gemahlen werden.

Eine wirkungsvolle Trocknung der Rohstoffe und insbesondere des Kalkschlammes ist durch die Verwendung der beim Klinkerbrennen hinter dem Brennofen anfallenden Heißgase möglich. Dabei wird der durch den hohen Wasseranteil des Kalkschlammes erhöhte Wärmebedarf bei der Trocknung gemäß einer Weiterbildung der Erfindung dadurch gedeckt, daß das den Brennofen verlassende Heißgas, das zunächst durch Verdunsten einer Flüssigkeit, insbesondere Wasser, gekühlt wird, beim Kühlen derart behandelt wird, daß die Menge der dabei verwendeten Flüssigkeit in Abhängigkeit von der aus der Suspension (Kalkschlamm) zu verdampfenden Flüssigkeit bestimmt ist.

Der das Drehofensystem verlassende Abgasvolumenstrom wird aus verfahrenstechnischen Gründen zunächst durch einen Verdampfungskühler geführt. Bei diesem Verfahrensschritt wird durch eine gezielte Wassereindüsung die Temperatur der Abgase bei einer gleichzeitigen Anhebung der Abgas-Wasserdampfbeladung, nach dem Stand der Technik auf etwa 200°C gesenkt.

Bei dem erfindungsgemäßen Verfahren wird nun die Kalkschlammtrocknung derart gesteuert, daß die in dem Verdampfungskühler (Kühlturm) eingebrachte Wassermenge um den Betrag des mit dem Kalkschlamm zugeführten Wassers reduziert ist, so daß sich Trocknungsgastemperaturen von etwa 230°C ergeben. Auf diese Weise wird ohne besondere Energiezufuhr ein Wärmestrom von etwa 2 Gkal/h für die Trocknung einer Kalkschlammenge von 5 t/h bereitgestellt; das ist genau die Energieeinsparung, die sich gegenüber einer andersartigen Verwertung des erfindungsgemäß verwendeten Kalkschlammes ergibt. Weiterhin hat sich herausgestellt, daß der Energiemehrbedarf durch das Betreiben der Aggregate für den Kalkschlamm dadurch in etwa kompensiert wird, daß bei der Erfindung die Energie, die nach dem Stand der Technik für den Mahlvorgang des Kalksteins erforderlich ist, eingespart wird.

Die erfindungsgemäß zu verwendenden Bauteile bzw. Verfahrensschritte unterliegen in ihrer Größe, Formgestaltung, Materialauswahl und technischen Konzeption bzw. ihren Verfahrensbedingungen keinen besonderen Ausnahmebedingungen, so daß die in dem jeweiligen Anwendungsgebeit bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung eines Ausführungsbeispieles anhand der zugehörigen Zeichnung, in der eine bevorzugte ausführungsform einer erfindungsgemäßen Anlage zur Zementklinkerherstellung schematisiert dargestellt worden ist.

Diese Anlage besteht, soweit sich nach dem Stand der Technik bekannt und eingangs beschrieben ist, aus folgenden nacheinander angeordneten Anlagenteilen: Separaten Brecheranlagen 1 für Mergel und 2 für Kalkstein, getrennten Zwischensilos 3 für Mergel und 4 für Kalkstein, Mühlenvorbunker 5 für Mergel und 6 für Kalkstein mit darunter angeordneten Dosierbandwagen 7 für die Beschickung einer nachgeordneten Walzenschüsselmühle 8 sowie entsprechenden Transportorganen zwischen diesen Anlageteilen. Die dosierten Kalkstein- und Mergelmengen werden der Walzenschüsselmühle 8 aufgegeben und dort bei gleichzeitiger Trocknung sehr fein gemahlen. Hierzu werden die Abgase der nachfolgend beschriebenen Drehrohrofenanlage 9 verwendet, die gleichzeitig das fein gemahlene Rohmehl aus der Walzenschüsselmühle austragen und dieses bis zum nachgeschalteten Elektrofilter 10 transportieren. Die dort von dem Rohmehl getrennten Abgase verlassen das System über Kamin 11, während das Rohmehl über pneumatische Senkrechtförderer 12 in ein Rohmehlsilo 13 gelangt.

Dem Drehrohrofen 14 ist ein Wärmeaustauscher 15 aus mehreren Zyklonstufen vorgeschaltet. Am Auslauf des abwärtsgeneigten Drehrohres 16 befindet sich ein Brenner 17 für die Bereitstellung der heißen Verbrennungsgase sowie ein Klinker-Gegenstrom-Kühler 18. In einem Voratssilo 19 wird Braun- bzw. Steinkohlenstaub für den Brenner 17 zwischengelagert. Der gekühlte Klinker wird in Vorratssilos 20 zwischengelagert, ehe er der Klinkervermahlung zugeführt wird.

Der Kalkschlamm wird durch Hinterkipper über die Sträße angeleifert und in einen Schlammbehälter 21 abgekippt. Hieraus wird der Kalkschlamm mittels mehrerer, am Boden des Schlammvorratsbehälters 21 angeordneter Schneckenförderer 22 ausgetragen und über einen nachgeordneten Schneckenförderer 23 von oben in einen Rührbehälter 24 gefördert, in welchem durch ein kontinuierlich betriebenes Rührwerk 25 ein Sedimentieren des Kalkschlammes verhindert wird. Die Suspension (Kalkschlamm) wird von einer Dickstoffpumpe 26 von der Suspensionsaustragöffnung 27 des Rühbehälters 24 über eine Suspensionsförderleitung 28 der Walzenschüsselmühle 8 zugeführt.

Bei einem praktischen Ausführungsbeispiel werden die Mengenanteile an Mergel, Kalkstein und Kalkschlamm derart zusammengestellt, daß der Calzium-Carbonatanteil des Rohmehls sich zu etwa 65—70 Gew.-% aus Mergel und Kalkstein und zu etwa 10—25 Gew.-% aus dem Kalkschlamm (bezogen auf die Trockenmasse) rekrutiert. Das Rohmehl besteht daher insgesamt aus etwa 75—95%, bevorzugt etwa 80 Gew.-% Calzium-Carbonat. Vom Heißgasaustrittsstutzen 29 der Drehrohrofenanlage 9 wird das heiße Abgas einem Kühlturm 31 zugeführt, dort auf etwa 230°C abgekühlt und über einen Trocknungsgaseintrittsstutzen 30 der Walzenschüsselmühle 8 zugeführt.

Der Kalkschlamm wird unmittelbar in die Mahlbahn der Walzenschüsselmühle 8 gefördert und dort gemeinsam mit Mergel und Kalkstein zu dem Rohmehl vermahlen.

Alle Anlagenteile der Kalkschlammanlage sind entsprechend dem Materialfluß elektrisch verriegelt. Weiterhin wird der Füllstand des Rührbehälters 24 durch geeignete regelungstechnische Maßnahmen konstant gehalten.

Die Dickstoffpumpe 26 ist in ihrer Fördermenge zwischen 1—10 t/h regelbar.

Insgesamt arbeitet das Verfahren sehr umwelfreundlich, da die gesamte Kalkschlammverarbeitung in einem geschlossenen System erfolgt, insbesondere bildet die Mahl/Trocknungskammer der Walzenschüsselmühle 8 eine gegenüber der Umgebungsatmosphäre geschlossene Einheit. Das Bedienungspersonal kann also mit dem stark ätzenden Kalkschlamm nicht in Berührung kommen. Ebenso gelangen die im Kalkschlamm enthaltenen Restphenole nicht in die Arbeitsumgebung des Bedienungspersonals, so daß jede Geruchsbelästigung vermieden wird.

Bezugszeichenliste

1 Brecheranlage
2 Brecheranlage
3 Zwischensilo
4 Zwischensilo
5 Mühlenvorbunker
6 Mühlenvorbunker
7 Dosierbandwagen
8 Walzenschüsselmühle
9 Drehrohrofenanlage
10 Elektrofilter
11 Kamin
12 Senkrechtförderer
13 Rohmehlsilo
14 Drehrohrofen
15 Wärmeaustauscher
16 Drehrohr
17 Brenner
18 Klinker-Gegenstrom-Kühler
19 Vorratssilo
20 Vorratssilo
21 Schlammbehälter
22 Schneckenförderer
23 Schneckenförderer
24 Rührbehälter
25 Rührwerk
26 Dickstoffpumpe
27 Suspensionsaustragöffnung
28 Suspensionsförderleitung
29 Heißgasaustrittsstutzen
30 Trocknungsgaseintrittsstutzen
31 Kühlturm

**Patentansprüche**

1. Verfahren zum Herstellen von Zementklinker durch Mischen, Vermahlen und Trocknen der Rohstoffe Mergel, Kalkstein und Kalkschlamm, wobei der als pumpfähige, wässrige Suspension vorliegende Kalkschlamm den Kalkstein in der zu brennenden Mischung ganz oder teilweise substituiert und durch anschließendes Brennen zu Zementklinker gekennzeichnet durch, das Verwenden von Kalkschlamm aus einem Teerverarbeitungsprozeß, insbesondere aus einem Reinigungsprozeß teerstämmiger Phenole und durch das gleichzeitige Mischen und Trocknen des Kalkschlammes mit den anderen Rohstoffen zu einem brennbaren Rohmehl.

2. Verfahren nach Anspruch 1, dadurch gekennzeichnet, daß der Kalkschlamm sowie die anderen Rohstoffe einer Mühle zugeführt und darin vermischt, gemahlen und gleichzeitig mittels heißer Gase getrocknet werden.

3. Verfahren nach einem der Ansprüche 1 bis 2, dadurch gekennzeichnet, daß der Kalkschlamm mittels der beim Klinkerbrennen hinter dem Brennofen anfallenden Heißgase getrocknet wird.

4. Verfahren nach Anspruch 3, dadurch gekennzeichnet, daß das den Brennofen verlassende Heißgas zunächst durch Verdunsten einer Flüssigkeit, insbesondere Wasser gekühlt wird und die Menge der dabei verwendeten Flüssigkeit in Abhängigkeit von der aus dem Kalkschlamm zu verdampfenden Flüssigkeit bestimmt ist.

5. Vorrichtung zum Herstellen von Zementklinker, bestehend zumindest aus einer Mühle (8) zum Mahlen und gleichzeitigen Trocknen der Rohstoffe und einem Brennofen (9) zum Brennen des gemahlenen und getrockneten Rohmehls sowie einem von dem Heißgasaustrittsstutzen (29) des Brennofens zum Trocknungsgaseintrittsstutzen (30) der Mühle führenden Trocknungsgas-Rohr, gekennzeichnet durch einen Vorratsbehälter (21 bis 25) für eine wässrige Suspension aus Calzium-Carbonat mit einer Suspensionsaustragöffnung (27) und eine zwischen der Suspensionsaustragöffnung und der Mühle (8) angeordnete Suspensionsförderleitung (28) mit darin angeordneter Suspensionsförderpumpe (26), wobei die Suspensionsförderleitung in einer Mahl/Trocknungskammer der Mühle, insbesondere einer Walzenschüsselmühle, mündet.

6. Vorrichtung nach Anspruch 5, dadurch gekennzeichnet, daß die Mahl/Trocknungskammer eine gegenüber der Umgebungsatmosphäre geschlossene Einheit bildet.

7. Vorrichtung nach Anspruch 5 oder 6, gekennzeichnet, durch einen der Suspensionsaustragöffnung (27) vorgeschalteten Rührbehälter (24) mit Rührwerk (25).

**Revendications**

1. Procédé pour préparer du clinker de ciment par mélange, broyage et séchage des matières premières, marne, calcaire et boue de chaux, dans lequel la boue de chaux, présente sous forme de suspension aqueuse pompable, remplace totalement ou partiellement le calcaire dans le mélange à calciner et, par calcination subséquente, de production de clinker de ciment, procédé caractérisé en ce qu'on utilise la boue de chaux provenant d'un procédé de traitement de valorisation de goudrons, en particulier de la boue obtenue à partir de phénols provenant du goudron résultant d'une opération de purification et caractérisé en ce qu'on mélange et sèche la boue de chaux en même temps que les autres matières premières pour obtenir une farine brute combustible.

2. Procédé selon la revendication 1, caractérisé en ce que la boue de chaux ainsi que les autres matières premières sont acheminées à un broyeur et y sont mélangées, broyées et simultanément séchées à l'aide de gaz chaud.

3. Procédé selon l'une des revendications 1 et 2, caractérisé en ce que la boue de chaux est séchée à l'aide des gaz chauds obtenus lors de la calcination du clinker derrière le four de cuisson ou de calcination.

4. Procédé selon la revendication 3, caractérisé en ce que le gaz chaud sortant du four de combustion est tout d'abord refroidi par évaporation d'un liquide, en particulier de l'eau, et en ce que la quantité du liquide que l'on utilise ainsi est déterminée en fonction de la quantité de liquide à évaporer de la boue de chaux.

5. Installation pour produire du clinker de ciment, consistant en au moins un broyeur (8) pour broyer et en même temps sécher les matières premières et en un four (9) pour cuire et calciner la farine brute, broyée et séchée, ainsi qu'en un tube de gaz de séchage partant du raccord (29) de sortie de gaz chaud du four de calcination pour parvenir au raccord (30) d'entrée des gaz de séchage dans le broyeur, installation caractérisée en ce qu'elle comporte un récipient formant réservoir (21 à 25) pour une suspension aqueuse de carbonate de calcium, avec une ouverture (27) de sortie de suspension et une conduite (28) de transport de suspension, placées entre l'ouverture de sortie de suspension et le broyeur (8), cette conduite comportant une pompe (26) de transport de suspension, la conduite de transport de suspension débouchant dans une chambre de broyage/séchage du broyeur, en particulier un broyeur à cylindres et galets pendulaires.

6. Installation selon la revendication 5, caractérisée en ce que la chambre de broyage/séchage forme une unité fermée par rapport à l'atmosphère environnante.

7. Installation selon la revendication 5 ou 6, caractérisée en ce qu'elle comporte un récipient (24), équipé d'un agitateur (25) et placé en amont de l'ouverture (27) de sortie de la suspension.

**Claims**

1. A process for the preparation of cement clinker by mixing, grinding and drying raw materials in the form of marl, limestone and lime mud, the lime mud, which is present in the form of a pumpable aqueous suspension, completely or partly substituting the limestone in the mixture to be calcined and being converted by subsequent calcination into cement clinker, characterised by the use of lime mud from a tar-treating process, more particularly from a process for purifying tar-derived phenols, and by the simultaneous mixing and drying of the lime mud with the other raw materials into a calcinable raw powder.

2. A process according to Claim 1, characterised in that the lime mud and the other raw materials are supplied to a mill, mixed and ground therein and simultaneously dried by means of hot gases.

3. A process according to Claim 1 and/or 2 characterised in that the lime mud is dried by means of the hot gases which arise after the kiln during clinker calcination.

4. A process according to Claim 3, characterised in that the hot gas leaving the kiln is first cooled by evaporation of a liquid, more particularly water, and the quantity of liquid used is determined in dependence upon the liquid to be evaporated from the lime mud.

5. An apparatus for the preparation of cement clinker comprising at least one mill (8) for grinding and simultaneously drying the raw materials and a kiln (9) for calcining the ground and dried raw powder and a drying gas tube which extends from the hot gas exit connection (29) of the kiln to the drying gas entry connection (30) of the mill, characterised by a supply receptacle (21—25) for an aqueous suspension of calcium carbonate, the receptacle being formed with a suspension delivery aperture (27) and receiving a suspension delivery line (28) which is disposed between the latter aperture (27) and the mill (8) and in which a suspension-conveying pump (26) is disposed, the suspension delivery line (28) terminating in a

grinding and drying chamber of the mill, more particularly a bowl mill crusher.

6. An apparatus according to Claim 5, characterised in that the grinding and drying chamber is a unit closed off from the ambient atmosphere.

7. An apparatus according to Claim 5 or 6, characterised by an impeller type mixer (24) which is disposed before the suspension delivery aperture (27) and which has an agitating mechanism (25).

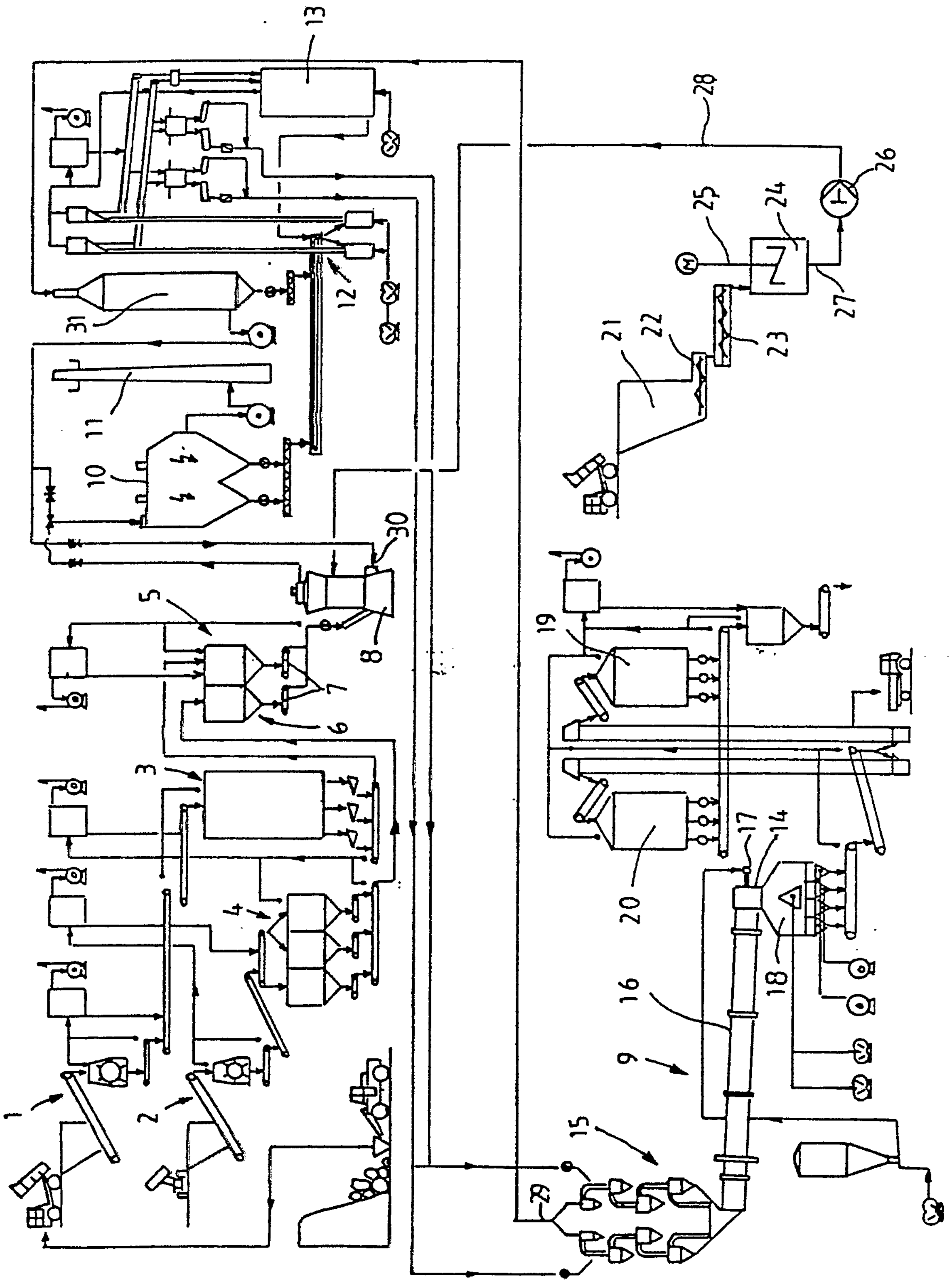

1
2
3
4
5
6
7
8
9
10
11
12
13
14
15
16
17
18
19
20
21
22
23
24
25
26
27
28
29
30
31